Europäisches Patentamt

European Patent Office

Office européen des brevets

(11) Numéro de publication: **0 252 816 B1**

(12) **FASCICULE DE BREVET EUROPEEN**

(45) Date de publication de fascicule du brevet:
**11.09.91**

(21) Numéro de dépôt: **87401540.7**

(22) Date de dépôt: **02.07.87**

(51) Int. Cl.⁵: **G05B 19/04**

(54) **Programmateur de commande de lave-linge à microprocesseur, et composant électromécanique.**

(30) Priorité: **10.07.86 FR 8610072**

(43) Date de publication de la demande:
**13.01.88 Bulletin 88/02**

(45) Mention de la délivrance du brevet:
**11.09.91 Bulletin 91/37**

(84) Etats contractants désignés:
**BE CH DE ES FR GR IT LI LU**

(56) Documents cités:
**FR-A- 2 365 151**
**US-A- 4 370 566**

(73) Titulaire: **CIAPEM**
**137, rue de Gerland**
**F-69007 - Lyon(FR)**

(72) Inventeur: **Delhomme, Bernard**
**THOMSON-CSF SCPI 19, avenue de Messine**
**F-75008 Paris(FR)**
Inventeur: **Garofalo, François**
**THOMSON-CSF SCPI 19, avenue de Messine**
**F-75008 Paris(FR)**
Inventeur: **Gonon, Martine**
**THOMSON-CSF SCPI 19, avenue de Messine**
**F-75008 Paris(FR)**

(74) Mandataire: **Grynwald, Albert et al**
**THOMSON-CSF SCPI**
**F-92045 PARIS LA DEFENSE CEDEX 67(FR)**

Rank Xerox (UK) Business Services

## Description

L'invention est relative à un lave-linge à fonctionnement automatique sous la commande d'un programmateur.

Un lave-linge comporte habituellement un tambour perforé dans lequel est disposé le linge à laver et qui tourne autour d'un axe horizontal dans une cuve destinée à contenir l'eau de lavage ou de rinçage. A l'heure actuelle pratiquement tous les lave-linge d'usage domestique sont à fonctionnement automatique, l'utilisateur ayant seulement à composer un programme -à l'aide de touches, boutons rotatifs ou analogues sur le tableau de commande de la machine- et à commander le démarrage de l'exécution du programme ainsi composé.

Un lave-linge de ce type est décrit dans US.A-4370566.

Une opération de lavage exécutée par le lave-linge sous la commande d'un programmateur comprend plusieurs phases : la première est une phase de prélavage, la seconde est une phase de lavage à laquelle succède habituellement un refroidissement ; puis on procède à plusieurs (par exemple quatre) opérations de rinçage, et la dernière phase est l'essorage du linge. Bien entendu certaines de ces opérations peuvent, au gré de l'utilisateur, être supprimées par exemple le prélavage ou l'essorage.

Il existe deux types principaux de programmateurs, l'un de nature essentiellement électronique, en général à microprocesseur, et l'autre de nature essentiellement électromécanique à moteur synchrone entraînant une ou plusieurs cames agissant sur l'état d'interrupteurs qui commandent divers organes du lave-linge tels que l'électrovanne d'alimentation en eau, la pompe de vidange ou le moteur d'entraînement du tambour.

L'inconvénient d'un programmateur de type essentiellement électromécanique est sa complexité et son prix. L'inconvénient d'un programmateur de type surtout électronique est qu'il n'est pas possible, pour un faible coût, de maintenir en mémoire l'état d'avancement du programme de lavage en cas d'interruption de l'alimentation en courant électrique de la machine ; en outre avec un tel programmateur du type électronique les moyens permettant l'acquisition et l'affichage du programme choisi ainsi que les relais de commande des éléments de puissance (telle que la résistance chauffante) sont d'un prix relativement élevé.

L'invention se rapporte à un programmateur ou dispositif de commande de lave-linge qui présente les avantages des programmateurs connus sans leurs inconvénients.

Le programmateur selon l'invention est caractérisé en ce qu'il comprend un microprocesseur et un composant électromécanique comportant un moteur électrique entraînant une ou plusieurs cames agissant sur l'état d'interrupteurs, des signaux représentant ces états, et donc l'avancement du programme de lavage, étant utilisés par le microprocesseur pour déterminer le temps d'exécution de chaque phase du programme et ainsi pour déclencher le passage d'un pas à un autre.

Le câblage est beaucoup plus simple qu'avec un programmateur du type uniquement électromécanique car au moins certains des interrupteurs ne sont utilisés que pour représenter l'avancement du programme de lavage. En outre on bénéficie de l'avantage du programmateur électromécanique : l'état d'avancement du programme est gardé en mémoire en cas d'interruption de l'alimentation en énergie électrique ; la composition du programme de lavage et sa visualisation peuvent être effectuées comme dans programmateur électromécanique en utilisant la position angulaire de la came ou des cames.

Pour commander le passage d'un pas à un autre on peut envisager de disposer un interrupteur commandé en série avec le moteur du composant électromécanique de façon à faire tourner ce moteur pendant un temps déterminé. Mais une telle procédure ne pourrait convenir car le passage d'un pas, c'est-à-dire la rotation d'une came d'un angle déterminé, correspond à un temps qui peut être variable, d'une part, parce qu'il existe un retard variable de la rotation du moteur par rapport au début de son alimentation et, d'autre part, en raison des dispersions inhérentes à la fabrication en grande série. C'est pourquoi, selon l'invention, un interrupteur du composant électromécanique est en parallèle avec un interrupteur commandé par le microprocesseur et cet ensemble en parallèle est en série avec le moteur d'entrainement des cames ; pour commander le passage d'un pas le microprocesseur rend d'abord l'interrupteur commandé conducteur, puis surveille d'état de conduction de l'interrupteur du composant électromécanique et interrompt la conduction de l'interrupteur commandé quand l'interrupteur dudit composant est fermé.

Pour surveiller l'état de conduction de l'interrupteur du composant électromécanique on surveille, par exemple, la différence de potentiel entre ses bornes ; à cet effet on interrompt périodiquement la conduction de l'interrupteur commandé en parallèle avec l'interrupteur mécanique.

L'interrupteur mécanique s'ouvre de façon classique après qu'une came du composant électromécanique ait tourné d'un angle déterminé.

Ainsi le microprocesseur assure le déclenchement du passage de pas, mais cette dernière opération est réalisée par le composant électromécanique.

De préférence le microprocesseur, le triac et un circuit interface entre une borne de surveillance de l'interrupteur mécanique et le microprocesseur sont disposés sur une même carte ou plaquette de circuit imprimé. La connexion de cette carte ou plaquette avec le moteur et l'interrupteur mécanique s'effectue de façon très simple par un seul fil qui assure la connexion de l'interrupteur commandé au moteur et la surveillance de l'état de conduction de l'interrupteur mécanique.

D'autres caractéristiques et avantages de l'invention apparaîtront avec la description de certains de ses modes de réalisation, celle-ci étant effectuée en se référant aux dessins ci-annexés sur lesquels:

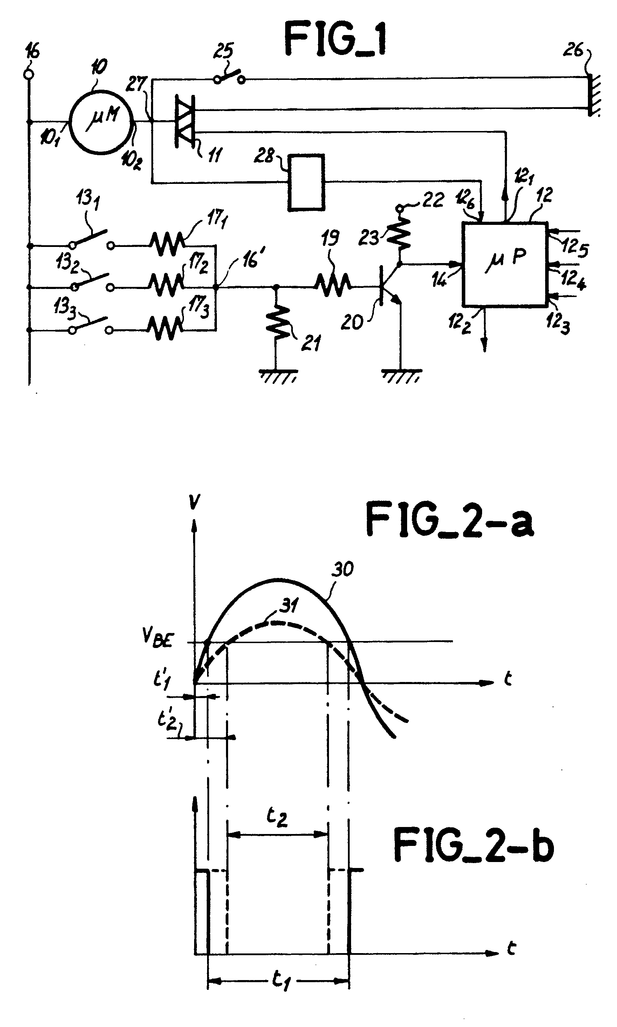

- la figure 1 est un schéma d'un dispositif de commande de lave-linge selon l'invention, et
- les figures $2_a$ et $2_b$ sont des diagrammes illustrant en partie le fonctionnement du dispositif de la figure 1.

L'exemple se rapporte à un lave-linge d'usage ménager du type à tambour perforé tournant autour d'un axe horizontal dans une cuve contenant l'eau de lavage ou de rinçage.

Avant la mise en marche de la machine, les diverses pièces de linge sont introduites dans le tambour. La mise en marche s'effectue après sélection d'un progamme pour lequel l'utilisateur affiche un certain nombre de données liées au linge telles que le type de linge, la température désirée de lavage, la vitesse de rotation du tambour pour l'essorage, la quantité de linge introduit et le degré de salissure.

En plus de la température de lavage et de la vitesse de rotation du tambour lors de l'essorage ainsi que des données explicitement affichées par l'utilisateur (prélavage ou non, suppression ou maintien de l'essorage, etc...) les paramètres de fonctionnement du lave-linge qui dépendent de la composition du programme sont, notamment, le volume d'eau, le temps de chaque opération, l'énergie de brassage, le nombre de rinçages et la quantité de produit lessiviel.

Pour la commande automatique du lave-linge on prévoit un programmateur représenté schématiquement sur la figure 1. Ce programmateur comporte un composant électromécanique avec un micromoteur 10, par exemple de type synchrone, alimenté par le réseau alternatif par l'intermédiaire soit d'un triac 11, dont la conduction est commandée par un microprocesseur 12, soit d'un interrupteur 25 du composant électromécanique comme on le verra plus loin.

Le moteur 10 entraîne une ou plusieurs cames (non représentées). La position angulaire de la came détermine l'état - ouvert ou fermé - d'interrupteurs $13_1$, $13_2$ et $13_3$ qui, contrairement aux programmateurs électromécaniques classiques, ne commandent pas directement le fonctionnement du moteur électrique d'entraînement du tambour. Ces interrupteurs $13_1$, $13_2$ et $13_3$ ont pour rôle de fournir à l'entrée du microprocesseur 12 une information sur l'avancement du programme de lavage, ce qui détermine la phase du programme à exécuter, en particulier pour la rotation du moteur d'entrainement du tambour et le temps de cette phase. C'est le microprocesseur 12 qui commande, par l'intermédiaire de circuits interfaces (non représentés), l'alimentation du moteur d'entrainement du tambour et son sens de marche. En outre, ce microprocesseur 12 contrôle, grâce au triac 11, la rotation, du micromoteur 10 et donc l'avancement du programme.

Certains des interrupteurs du programmateur électromécanique commandent, de façon classique, directement d'autres organes du lave-linge tels que la résistance de chauffage de l'eau, la pompe de vidange et les électrovannes.

Outre la sortie $12_1$ reliée à la gâchette du triac 11, le microprocesseur présente une sortie $12_2$ de commande du moteur d'entrainement du tambour, une entrée $12_3$ provenant d'un capteur de température de l'eau de lavage ou de prélavage, une entrée $12_4$ recevant un signal représentatif du niveau de l'eau dans la cuve, une entrée $12_5$ sur laquelle est appliquée un signal représentant la vitesse d'essorage désirée, et une entrée $12_6$ dont la fonction sera décrite plus loin.

Par contre le microprocesseur 12 présente une seule entrée 14] sur laquelle sont appliqués les signaux représentant les états des interrupteurs $13_1$, $13_2$ et $13_3$.

Une première borne de chacun des interrupteurs $13_1$, $13_2$ et $13_3$ est reliée à une borne 16 du réseau d'alimentation en courant alternatif. Les secondes bornes des interrupteurs $13_1$, $13_2$ et $13_3$ sont reliées à un point commun 16' par l'intermédiaire de résistances respectivement $17_1$, $17_2$, $17_3$, toutes de valeurs distinctes.

Le point commun 16' aux résistances $17_1$ $17_2$, et $17_3$ est relié à la base d'un transistor 20, de type NPN dans l'exemple, par l'intermédiaire d'une résistance 19. Cette borne 16' est également connectée à la masse par l'intermédiaire d'une autre résistance 21.

Le collecteur du transistor 20 est relié à l'entrée 14 du microprocesseur 12 et il reçoit également une tension continue de référence appliquée sur une borne 22 par l'intermédiaire d'une résistance 23. Enfin l'émetteur du transistor 20 est relié à la masse.

Quand tous les interrupteurs $13_1$, $13_2$, et $13_3$ sont ouverts, la base du transistor 20 est en l'air et celui-ci reste bloqué. Dans ces conditions l'entrée 14 du microprocesseur 12 ne reçoit aucun signal.

Quand un (ou plusieurs) interrupteur(s) 13 est fermé, sur la base du transistor 20 est appliqué un potentiel alternatif proportionnel à la tension du secteur et dont l'amplitude dépend de la valeur de la résistance (ou des résistances) en série avec l'interrupteur (ou les interrupteurs) fermé(s).

A chaque alternance de la tension alternative du secteur le transistor 20 est conducteur pendant un temps qui est fonction de l'amplitude du signal alternatif appliqué sur sa base. En effet (figure $2_a$) le transistor 20 est conducteur lorsque sa tension base-émetteur dépasse un seuil de conduction $V_{BE}$ et le temps de conduction au cours de chaque alternance est d'autant plus important que l'amplitude du signal alternatif est plus importante. Cette propriété est illustrée sur les diagrammes des figures $2_a$ et $2_b$. Sur ces diagrammes le temps t a été porté en abscisses et la tension V en ordonnées.

Le diagramme de la figure $2_a$ représente la variation de la tension base-émetteur du transistor 20 pour deux amplitudes différentes, la courbe en trait plein 30 correspondant à une amplitude plus importante que pour la courbe 31 en traits interrompus. Le diagramme de la figure $2_b$ représente la variation du potentiel du collecteur du transistor 20 en fonction du temps t. Le potentiel du collecteur est nul quand le transistor 20 est conducteur. On voit que le temps $t_1$ de conduction du transistor 20 lors de l'application du signal 30 est plus important que le temps de conduction $t_2$ quand le signal 31 est appliqué sur la base du transistor 20.

Le microprocesseur 12 est programmé pour transformer, à chaque alternance, la durée $t_1$ ou $t_2$ en un nombre binaire. Ce nombre représente l'état des interrupteurs $13_1$, $13_2$ et $13_3$.

En variante le signal sur l'entrée 14 du microprocesseur 12 n'est pas déterminé par le temps $t_1$ ou $t_2$ mais par le temps $t'_1$ ou $t'_2$ séparant le début de l'alternance du début de la conduction du transistor 20 ou autre interrupteur commandé.

L'état des interrupteurs 13 dépend de la position de la came ou des cames entrainée(s) par le moteur 10 et donc de l'avancement du programme de lavage. Ainsi la valeur du signal appliqué sur l'entrée 14 représente l'avancement du programme de lavage. En fonction de la valeur de ce signal, le microprocesseur commande le moteur d'entrainement du tambour, en agissant sur la conduction d'un triac (non montré) en série avec ce moteur. En outre le microprocesseur détermine aussi le temps d'exécution de chaque opération du programme de lavage. C'est pourquoi il commande, par sa sortie $12_1$, l'alimentation du moteur 10 du composant électromécanique. Ce moteur 10 permet le passage d'une étape à une autre du programme de lavage.

On pourrait envisager que le microprocesseur 12 commande le passage d'un pas du programme en rendant le triac 11 conducteur pendant un temps déterminé ; mais une telle commande ne peut en général fonctionner correctement car le temps de passage d'un pas à un autre n'est pas constant en raison des dispersions inhérentes à la fabrication en grande série ; on a aussi constaté que, pour un même composant électromécanique, le temps de passage d'un pas à un autre peut varier. C'est pourquoi, selon une disposition importante de l'invention, le triac 11 est utilisé pour déclencher le passage d'un pas à un autre et ce triac 11 est utilisé pour déclencher le passage d'un pas à un autre et ce triac 11 est coupé quand on a constaté que l'opération de passage de pas a débuté.

A cet effet, en série avec le moteur 10 est disposé un interrupteur 25 du composant électromécanique, c'est-à-dire un interrupteur dont l'état dépend de la position d'une came entrainée par le micromoteur 10.

Le microprocesseur 12 surveille, par l'entrée $12_6$, l'état de conduction de l'interrupteur 25 et dès qu'il a détecté que cet interrupteur est fermé le triac 11 est ouvert.

Ce triac 11 est en parallèle avec l'interrupteur 25. Cet ensemble en parallèle est disposé entre une borne $10_2$ du micromoteur 10 et la seconde borne 26 du réseau d'alimentation. La borne commune 27 au triac 11 et à l'interrupteur 25 qui est opposée à la borne 26 est reliée à l'entrée $12_6$ par l'intermédiaire d'un circuit interface 28.

Le microprocesseur 12, le triac 11 et le circuit 28 sont disposés sur une même plaquette de circuit imprimé (non représentée). La configuration représentée sur la figure 1 présente alors l'intérêt qu'il suffit d'un seul fil conducteur 29 pour assurer, d'une part, la connexion du triac 11 au moteur 10 et, d'autre part, la surveillance de l'état de conduction de l'interrupteur 25. En effet le signal transmis sur l'entrée $12_6$ par l'intermédiaire du circuit 28 représente la différence de potentiel entre les bornes 26 et 27 dont la valeur dépend de l'état de conduction de l'interrupteur 25.

Lorsque le microprocesseur 12 a déterminé qu'il était nécessaire de passer à l'étape suivante du programme de lavage il rend le triac 11 conducteur. Ainsi le moteur 10 commence à tourner. Pour permettre la surveillance de l'état de conduction de l'interrupteur 25, le triac 11 est ouvert périodiquement, par exemple pour une alternance sur dix du signal alternatif du réseau d'alimentation et, pendant ce temps, le microprocesseur utilise la donnée introduite par son entrée $12_6$ pour déterminer si l'interrupteur est ouvert ou fermé. Si l'interrupteur est ouvert la borne 27 est en l'air et le circuit 28 transmet un signal binaire, qui est par exemple "0", sur l'entrée $12_6$ représentant l'état ouvert de l'interrupteur 25. Dans ces conditions, après cette alternance, le triac 11 est de nouveau fermé et la lecture s'effectue encore périodiquement de la manière décrite. Quand l'interrupteur 25 est fermé le circuit 28 transmet un signal "1" sur l'entrée $12_6$. Dans ce cas, après détection de ce signal, le triac 11 est ouvert.

A la fin du passage de pas l'interrupteur 25 s'ouvre, le triac 11 restant ouvert.

Les valeurs des résistances $17_1$, $17_2$, et $17_3$ en série avec les interrupteurs $13_1$, $13_2$, et $13_3$ sont telles que les temps de conduction du transistor 20 soient distincts pour les diverses combinaisons possibles d'états des interrupteurs.

Le dispositif de commande de lave-linge qui vient d'être décrit en relation avec les figures 1 et 2 présente les avantages suivants :

Il combine les avantages de dispositifs de type purement électronique et de type purement électromécanique, à savoir le maintien en mémoire de l'état d'avancement du programme de lavage (par la partie électromécanique du dispositif) et le grand nombre de possibilités offertes par le microprocesseur 12. Par contre sa partie électromécanique est nettement moins complexe que celle d'un dispositif de commande purement de ce type ; par rapport à un dispositif purement électronique il ne présente pas l'inconvénient de ne pouvoir garder en mémoire l'état d'avancement du programme de lavage en cas d'interruption de l'alimentation en énergie électrique.

En outre, le câblage est particulièrement simple, notamment parce que les états des interrupteurs 13 sont représentés par des signaux appliqués sur une entrée unique 14 du microprocesseur 12.

**Revendications**

1. Programmateur de commande du fonctionnement d'un appareil électroménager comprenant un circuit de commande (12) et un composant électromécanique comportant un moteur électrique (10) entraînant une ou plusieurs came (s) agissant sur l'état d'interrupteurs mécaniques ($13_1$, $13_2$, $13_3$, 25), des signaux représentant les états de certains ($13_1$, $13_2$, $13_3$,) de ces interrupteurs, et donc l'avancement du programme de l'opération en cours, étant utilisés par le circuit de commande (12) pour déterminer la durée de chaque opération du programme, le passage d'une opération à une autre étant commandé par ledit circuit qui agit sur la conduction d'un interrupteur commandé (11) en série avec le moteur (10) de façon à assurer le démarrage de ce moteur caractérisé en ce que l'appareil électroménager étant un lave-linge et le circuit de commande un microprocesseur, la poursuite de l'alimentation du moteur est assurée uniquement par un interrupteur mécanique dudit composant, également en série avec le moteur (10).

2. Programmateur selon la revendication 1 caractérisé en ce que l'état de conduction de l'interrupteur mécanique (25) est surveillé par le microprocesseur (10) qui interrompt la conduction de l'interrupteur commandé (11) quand cet interrupteur mécanique (25) est fermé.

3. Programmateur selon la revendication 2 caractérisé en ce qu'on surveille l'état de conduction de l'interrupteur mécanique (25) en série avec le moteur (10) en surveillant la tension entre les bornes de cet interrupteur.

4. Programmateur selon la revendication 3 caractérisé en ce que l'interrupteur commandé (11) étant en parallèle avec l'interrupteur mécanique (25), pour surveiller la tension aux bornes de l'interrupteur mécanique (25) en série avec le moteur (10) on interrompt périodiquement la conduction de l'interrupteur commandé (11).

5. Programmateur selon la revendication 4 caractérisé en ce que la conduction de l'interrupteur commandé (11) est interrompue toutes les n périodes du courant alternatif d'alimentation en énergie électrique, n étant par exemple égal à dix.

6. Programmateur selon l'une des revendications 3 à 5 caractérisé en ce que, le microprocesseur (12) et l'interrupteur commandé (11) étant sur une même carte ou plaquette de circuit imprimé, une connexion commune (29) est prévue pour le branchement de l'interrupteur commandé (11) au moteur (10) et pour la surveillance du potentiel à l'une des bornes de l'interrupteur mécanique (25) en série avec ledit moteur (10).

**Claims**

1. A programmer for the operation control of a domestic electrical apparatus comprising a control circuit (12) and an electromechanical component including an electromotor (10) which drives at least one cam acting on the switching state of mechanical switches ($13_1$, $13_2$, $13_3$, 25), wherein signals representing the switching states of certain ones ($13_1$, $13_2$, $13_3$) of these switches and thus the advance of the running operation program are used by the control circuit (12) for determining the duration of each program step, the transition from one step to another being controlled by said circuit which acts on the conduction state of a controlled switch (11) which is connected in series with the motor (10) in order to ensure the startup of the motor, characterized in that, the domestic electrical apparatus being a washing machine and the control circuit being a microprocessor, the continued energy supply of the motor is ensured only via a mechanical switch of said component which is also connected in series with the motor (10).

2. A programmer according to claim 1, characterized in that the switching state of the mechanical switch (25) is monitored by the microprocessor (10) which opens the controlled switch (11) if the mechanical switch (25) is closed.

3. A programmer according to claim 2, characterized in that the conduction state of the mechanical switch (25) in series with the motor (10) is monitored by monitoring the voltage at the terminals of this switch.

4. A programmer according to claim 3, characterized in that, the controlled switch (11) being in parallel with the mechanical switch (25), the controlled switch (11) is periodically opened in order to monitor the voltage at the terminals of the mechanical switch (25) which is in series with the motor (10).

5. A programmer according to claim 4, characterized in that the controlled switch (11) is opened every n-th period of the alternating power supply source, with n being for example equal to 10.

6. A programmer according to one of claims 3 to 5, characterized in that, the microprocessor (12) and the control switch (11) being on a common printed circuit card or plate, a common connection (29) is provided for branching the controlled switch (11) to the motor (10) and for monitoring the potential at one of the terminals of the mechanical switch (25) which is in series with said motor (10).

**Patentansprüche**

1. Programmsteuerorgan zur Steuerung des Betriebs eines Haushaltsgeräts, mit einem Steuerkreis (12) und einem elektromechanischen Bauteil mit einem Elektromotor (10), der eine oder mehrere den Zustand mechanischer Schalter ($13_1$, $13_2$, $13_3$, 25) beeinflussende Nocken antreibt, wobei Signale, die den Zustand einzelner ($13_1$, $13_2$, $13_3$) dieser Schalter und damit den Fortgang des gerade laufenden Betriebsprogramms anzeigen, vom Steuerkreis ausgewertet werden, um die Dauer jedes Programmschritts zu bestimmen, wobei der Übergang von einem Programmschritt zum nächsten durch diesen Steuerkreis bewirkt wird, der einen mit dem Motor (10) in Reihe liegenden gesteuerten Schalter schließt, dadurch gekennzeichnet, daß die Speisung des Motors im Fall, daß es sich bei dem Haushaltsgerät um eine Waschmaschine und bei dem Steuerkreis um einen Mikroprozessor handelt, nur über einen mechanischen Schalter des elektromechanischen Bauteils aufrechterhalten wird, der ebenfalls mit dem Motor (10) in Reihe geschaltet ist.

2. Programmsteuerorgan nach Anspruch 1, dadurch gekennzeichnet, daß der leitende Zustand des mechanischen Schalters (25) vom Mikroprozessor (10) überwacht wird, der den Leitzustand des gesteuerten Schalters (11) beendet, sobald dieser mechanische Schalter (25) geschlossen wird.

3. Programmsteuerorgan nach Anspruch 2, dadurch gekennzeichnet, daß man dadurch den Leitzustand des mechanischen Schalters (25), der in Reihe mit dem Motor (10) liegt, überwacht, daß man die Spannung an den Klemmen dieses Schalters überwacht.

4. Programmsteuerorgan nach Anspruch 3, dadurch gekennzeichnet, daß der gesteuerte Schalter (11) parallel zum mechanischen Schalter (25) liegt und zur Überwachung der Spannung an den Klemmen des mechanischen Schalters (25), der in Reihe mit dem Motor (10) liegt, periodisch geöffnet wird.

5. Programmsteuerorgan nach Anspruch 4, dadurch gekennzeichnet, daß der Leitzustand des gesteuerten Schalters (11) periodisch alle n Perioden des Speisewechselstroms unterbrochen wird, wobei n beispielsweise 10 ist.

6. Programmsteuerorgan nach einem der Ansprüche 3 bis 5, dadurch gekennzeichnet, daß, wenn der Mikroprozessor (12) und der gesteuerte Schalter (11) auf einer gemeinsamen Druckschaltungsarte oder -platte liegen, eine gemeinsame Verbindung (29) für den Anschluß des gesteuerten Schalters (11) an den Motor (10) und für die Überwachung des Potentials an einer der Klemmen des mechanischen Schalters (25) vorgesehen ist, der mit dem Motor (10) in Reihe liegt.

# FIG_1

# FIG_2-a

# FIG_2-b